# EUROPEAN PATENT SPECIFICATION

(11) **EP 4 324 059 B1**
(45) Date of publication and mention of the grant of the patent: **09.12.2026**
(21) Application number: 22721467.3
(22) Date of filing: 13.04.2022
(51) Int. Cl.: H02G 3/08, H02G 3/12, H02G 3/14

(54) **FLUSH-TO-WALL ELECTRICAL BOX**
UNTERPUTZ-ELEKTRODOSE
BOÎTE ÉLECTRIQUE ENCASTRÉE DANS LE MUR

(30) Priority: 14.04.2021 IT 202100009320
(43) Date of publication of application: 21.02.2024
(73) Proprietor: Contact Italia srl, 70022 Altamura (BA) (IT)
(72) Inventor: MAGGI, Pietro Antonio, 70022 Altamura (BA) (IT)
(74) Representative: Giuliano, Natalia
(86) International application number: PCT/IB2022/053476
(87) International publication number: WO 2022/219556

(56) References cited:
- EP-A1- 2 187 492
- WO-A1-2009/122242
- DE-A1- 10 229 930

## Description

The present invention relates to a flush-to-wall electrical box.

As is known, there are various solutions for flush-to-wall electrical boxes.

A first known solution is reported in patent application IT102012902103136 which describes a box for the installation and wiring of electrical devices comprising a box-like body open at the front, perimeter walls and a perimeter edge comprising fixing means, and in particular a plurality of fins perpendicular to the bottom and parallel to the fixing wall.

A second solution is reported in the patent application WO2009122242 which describes an electrical panel having a back wall and a side wall that defines a compartment for electrical components, a mask to be applied to a free end of the side wall. The housing is designed to be recessed into a wall and has a front edge and a front panel to be applied to the housing in order to close the internal space. The panel has a visible surface which, when said panel is closed, is coplanar and surrounded by the leading edge of the mask.

A third solution is reported in patent application IT102018000001528 which describes a junction box that can be installed on the wall and in particular in plasterboard walls. The box comprises a base structure, able to define a housing volume for electric cables and other components, which comprises a bottom wall, perimeter walls and a perimeter edge. The junction box also comprises a through hole defined in correspondence with the perimeter edge, an abutment support, a threaded pin, housed in the through hole, an elongated locking element that can be screwed onto the threaded pin. The perimeter wall comprises a guiding surface configured in such a way that when screwing the elongated locking element onto the threaded pin it slides on the guiding wall, moving from a position proximal to the perimeter wall to a position protruding towards the outside of the wall perimeter. The junction box includes removable fixing flanges that protrude from the perimeter walls towards the outside of the base structure.

A fourth solution is reported in patent application GB2440468A which describes a housing for an electrical panel comprising a rear panel and one or more side walls that delimit a semicircular area. At least one peripheral flange is included with a protrusion adjacent to an opening that provides an elastic movement of the engaging protuberance of the lid. The lid can be equipped with a hole to hook onto the engagement flap.

A fifth solution is reported in European patent application EP2648296 which describes a modular electrical device, particularly for switches, sockets and other electrical components to be applied to a wall, which comprises a frame and one or more electrical components which can be fixed to the frame; the frame includes engaging elements adapted to engage gripping elements provided on the electrical components to be associated with the frame. The engagement members and the gripping members comprise axial guide means, suitable for allowing the guided sliding of the electrical component with respect to the frame, and locking means for blocking the axial movement of the electrical component with respect to the frame. Said guide means comprise inverted dovetail elements, inserted and sliding along external profiles of the frame. The locking means comprise at least one tooth, associated with an elastically deformable and snap-engageable part. The locking means can be disengaged by acting on the elastic wall by applying a slight pressure.

A sixth solution is reported in patent application US2019 / 0312420A1 which describes an electrical box which includes a base, a mobile element and an actuator, for example a screw. The base is configured to mate with the cassette and includes a flange and has slots that can be aligned with the threaded holes in the base, so that the distance between the base and the movable element is adjustable by means of a screw. Other solutions are known from EP 2 187 492 A1 and DE 102 29 930 A1.

However, the known solutions suffer from the problem of not limiting the risk of breaking the plasterboard or masonry around the box during the operations of use (opening and closing).

Furthermore, the known solutions do not provide a homogeneous and optimized aesthetics when installed on plasterboard walls, since there are always visible plastic parts which inevitably are of different colour from the paint of the walls.

The purpose of the present invention is to provide a flush-to-wall electrical box capable of providing optimized installation and opening / closing operations, without the risk of breakage or cracks, and at the same time providing a homogeneous aesthetic appearance to the portion of the wall in which the box is installed, therefore having characteristics such as to overcome the limits of the currently known electrical boxes.

According to the present invention, a flush-to-wall electrical box is realized, as defined in claim 1.

For a better understanding of the present invention, a preferred embodiment is now described, purely by way of non-limiting example, with reference to the attached drawings, in which:
- Figure 1 shows a three-dimensional schematic view of a first embodiment of a flush-to-wall electrical box, according to the invention;
- Figure 2 shows a disassembled schematic view of the flush-to-wall electrical box of figure 1, according to the invention;
- Figures 3A-3D show four schematic views of the flush-to-wall electrical box of figure 1 when respectively with an external card, with the external card inserted between the box and its lid and the disassembled card and a detail thereof, according to the invention ;
- figure 4 shows a three-dimensional schematic view of the flush-to-wall electrical box of figure 1 and in particular of a system for locking the lid to the frame, according to the invention;

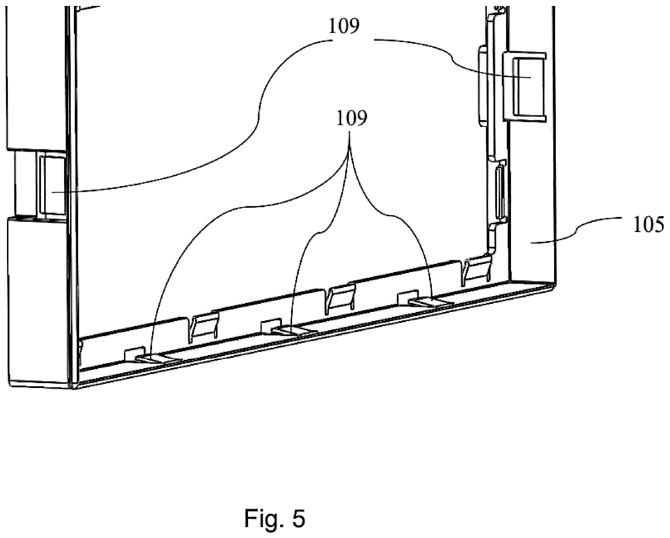

- figure 5 shows a three-dimensional schematic view of a portion of a frame of the flush-to-wall electrical box of figure 1, according to the invention;
- figure 6 shows a front view of the frame of the flush-to-the-wall box of figure 1, according to the invention;
- Figure 7 shows a first disassembled schematic view of a second embodiment of the flush-to-wall electrical box, according to the invention;
- Figure 8 shows a second disassembled schematic view of a second embodiment of the flush-to-wall electrical box, according to the invention;
- Figure 9 shows a three-dimensional view of the frame with mesh and thin profile of the second embodiment of the flush-to-wall box, according to the invention;
- Figures 10A-10B show three-dimensional views respectively of the first and second embodiment with internal separators, according to the invention;
- Figures 11A-11B respectively show a perspective view of the separator of Figure 10A and a front view of the separator of Figure 10B, according to the invention;

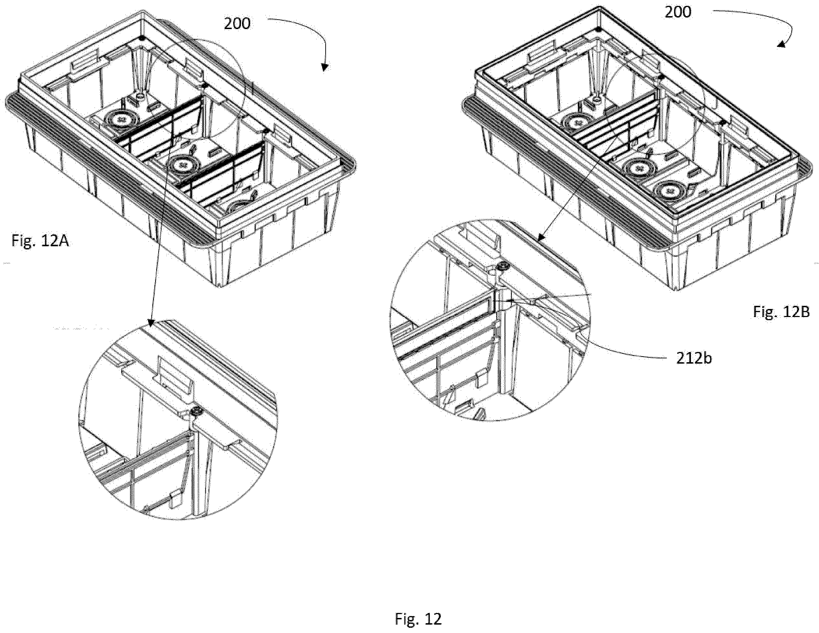

- Figures 12A-12B show three-dimensional views of two different configuration of internal separators, respectively in case of single or double plasterboard sheets, in the electrical box according to the invention.

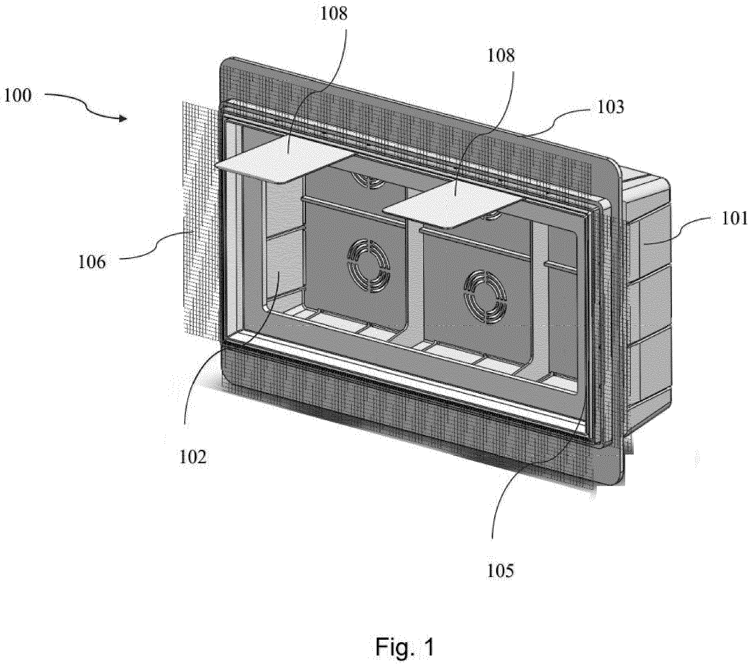

With reference to Figure 1, a first embodiment of a flush-to-wall electrical box 100 is shown comprising:
- a box-like body 101 able to define a housing volume for electrical and corrugated cables,
- perimeter fixing walls 102,
- a perimeter edge 103 of the box like body 101.

The flush-to-wall electrical box 100 is configured to be fixed to a wall, also in plasterboard, by means of the perimeter fixing walls 102 and / or by means of holes made in the bottom of the box-like body 101.

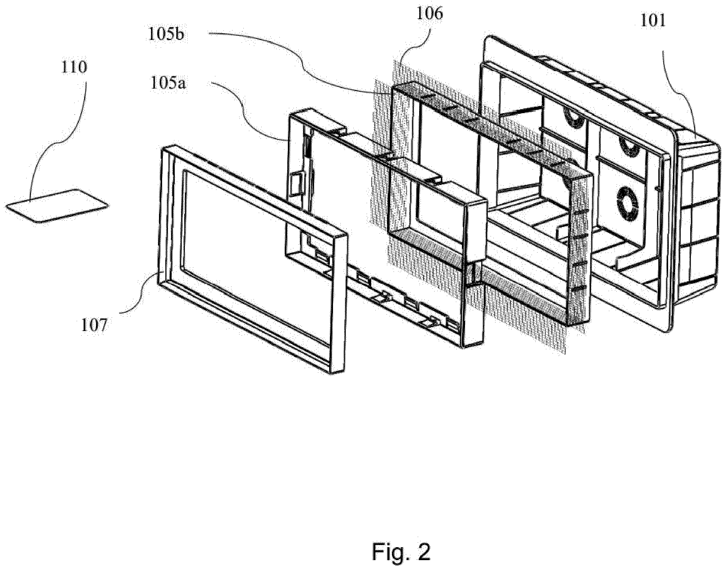

According to an aspect of the invention, the electrical box 100 comprises a first frame 105 composed of a first profile 105a and a second profile 105b and a net 106 interposed between the first profile 105a and the second profile 105b, as shown in figure 2.

According to an aspect of the invention, the net 106 protrudes beyond the perimeter edge 103, advantageously avoiding the formation of cracks at the edges of the electrical box 100. In use, the filler and paint for smoothing the wall are applied to the net 106.

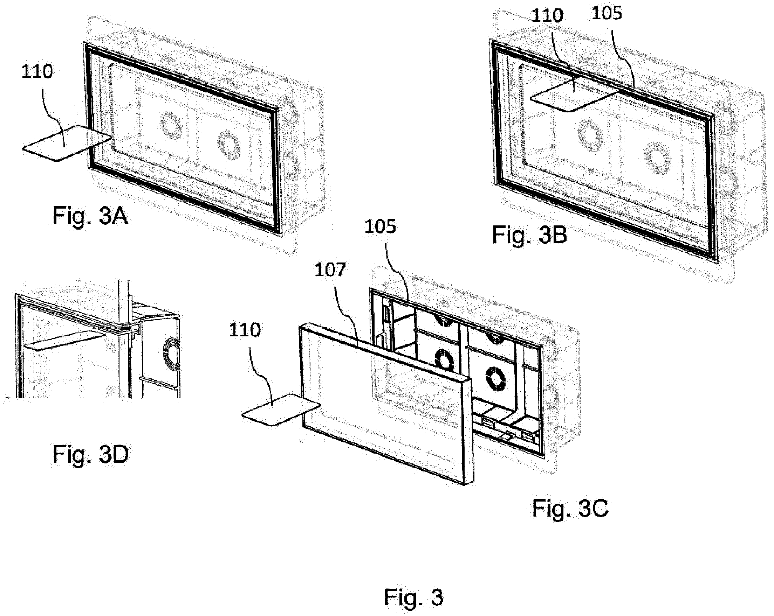

According to an aspect of the invention, as shown in Figure 3, the electrical box 100 also includes a front closing profile 107, or lid, designed to close the space inside the box-like body 101.

According to one aspect of the invention, the front closing profile 107 is centrally perforated, as shown in figure 2.

In this way, a portion of plasterboard can be inserted in the front closing panel 107 in such a way as to make the wall in which the electrical box 100 is installed visually homogeneous.

The perforated portion of the front closing profile 107 is preferably rectangular in shape and having internal profiles such as to support a plasterboard closure panel.

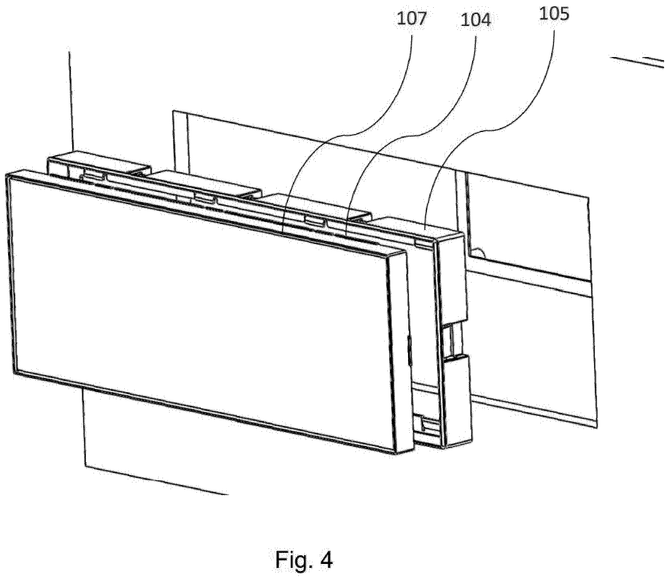

According to a further aspect of the invention, as shown in figure 4, the front closing profile 107 is equipped with a plurality of safety teeth 104 which can be snapped between the first frame 105 and the perimeter fixing walls 102, projecting orthogonally to the plane of the first frame 105. In particular, each safety tooth 104 of the plurality of safety teeth 104 can be snapped into a corresponding plurality of lateral flaps 109 present in the perimeter of the first frame 105.

During installation, the front closing profile 107 is superimposed and fixed to the first frame 105 by initial sliding of each tooth 104 of the plurality of safety teeth 104 on the corresponding lateral flap 109, and subsequent snap locking.

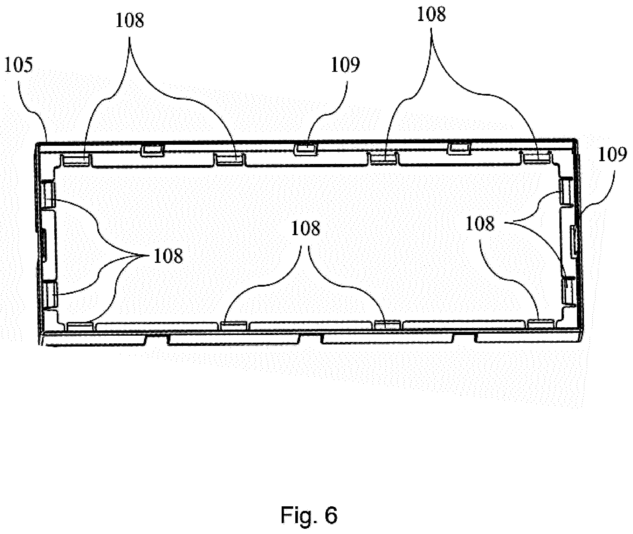

Furthermore, according to an aspect of the invention, the first frame 105 comprises a plurality of thrust flaps 108, shown in figure 6, which are compressed when in use, the front closing profile 107 is snap-fixed on the first frame 105.

The thrust flaps 108 are configured to facilitate the release of the closing profile 107 when a flat element having a suitable thickness is interposed between the closing profile 107 and the first frame 105, for example, according to a preferred embodiment, the flat element 110 shown in figure 3.

As shown in Figure 6, the plurality of lateral flaps 109 is placed perimeter, on an outer edge of the first frame 105, while the plurality of thrust flaps 108 is placed perimetrically on an inner edge of the frame 105.

According to another aspect of the invention, the electrical box 100 comprises a system for adjusting the distance between the first frame 105 and the box-like body 101.

In particular, in the case of application in plasterboard, the electrical box 100 has a plurality of screws housed in suitable seats located at each corner of the box-like body 101, said screws allowing the adjustment of the distance between the frame 105 and the box-like body 101, and therefore of the overall thickness of the electrical box 100 when installed.

According to another aspect of the invention, the adjustment of the distance between the frame 105 and the box-like body 101 takes place by means of a plastic element with the usual dimensions of the plasterboard walls in order to avoid manual adjustment and already have fixed thicknesses based on the standard.

Following the adjustment of the distance by means of the adjustment system, the frame 105, comprising the first profile 105a and the second profile 105b, is locked onto the box-like body 101.

According to a further aspect of the invention, the electrical box 100 comprises a system for releasing the front closing profile 107, for example consisting of a flat element 110, shown in figure 3, and the plurality of thrust flaps 108, shown in figure 6 .

The flat element 110 can be inserted in use in the space interposed between the front closing profile 107 and the first frame 105, by inserting the flat element 110 in correspondence with one of the thrust flaps 108, this is defused since the distance with the front closing profile 107 increases, and the latter can be extracted without applying forces or levering on the perimeter of the electrical box 100, thus avoiding the risk of injury or cracks in the wall where the box is installed.

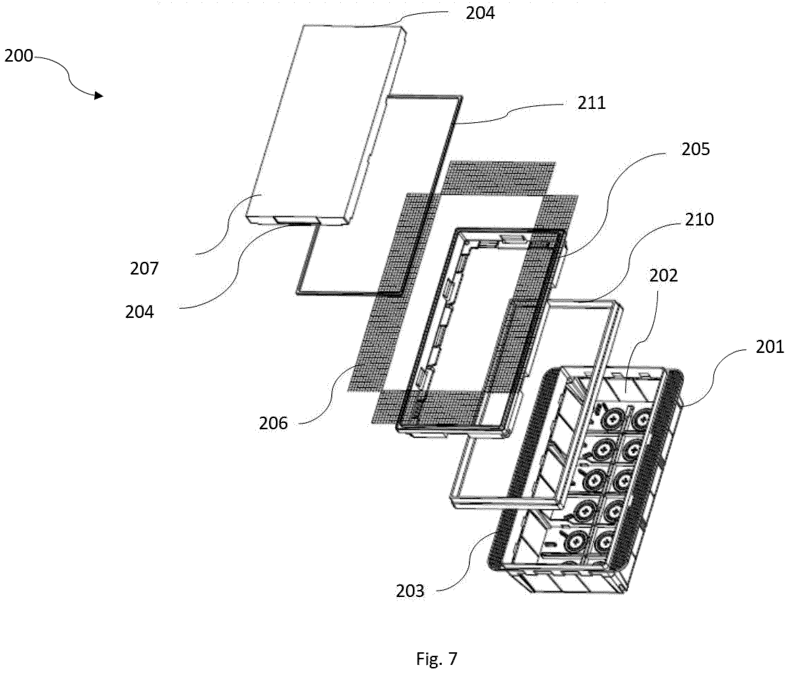

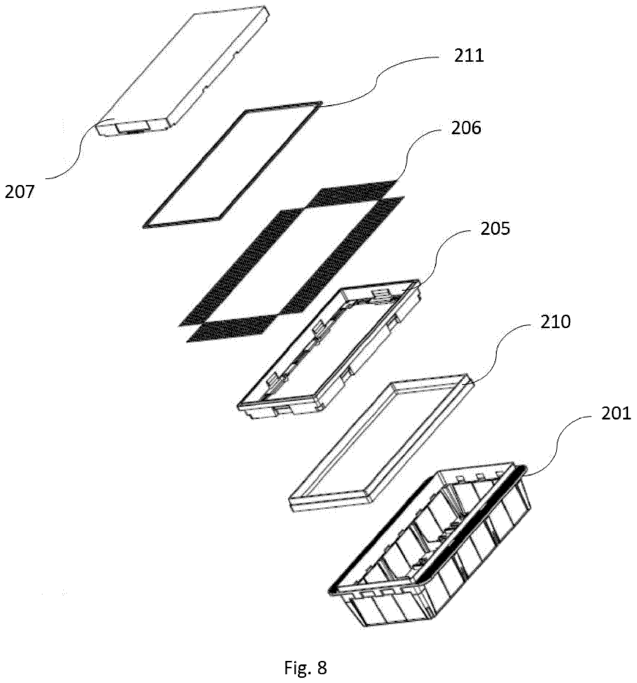

Figures 7 and 8 show a second embodiment of the flush-to-the-wall electrical box 200 comprising: a box-like body 201 designed to define a housing volume for electric and corrugated cables, perimeter fixing walls 202, a perimeter edge 203 of the box like body 201. The flush-to-wall electrical box 200 is adapted to be fixed to a wall by means of the perimeter fixing walls 202 and / or by means of holes made in the bottom of the box-like body 201.

According to an aspect of the invention, the electrical box 200 comprises a first frame 205, a net 206 and a thin profile 211 coupled in the perimeter groove of the first frame 205 and by ultrasonic welding blocking the net 206.

Furthermore, the electrical box 200 comprises a second frame 210 underneath the first frame 205, interposed between the first frame 205 and the box-like body 201, and fixed by means of screws housed in suitable cavities of the first frame 205, to lock the assembly of first frame 205, second frame 210 and box-like body 201.

In this way, it is possible to mount this box even with double-sheeted plasterboard thicknesses, i.e. equal to 26 mm, rather than with normal plasterboard thickness equal to 13mm.

According to an aspect of the invention, the net 206 protrudes beyond the perimeter edge 203, advantageously avoiding the formation of cracks at the edges of the electrical box 200.

According to an aspect of the invention, the electrical box 200 also includes a front closing profile 207, or lid , designed to close the space inside the box-like body 201 .

According to a further aspect of the invention, the front closing profile 207 is equipped with a plurality of safety teeth 204, that can be snap fastened between the first frame 205, projecting orthogonally to the plane of the first frame 205.

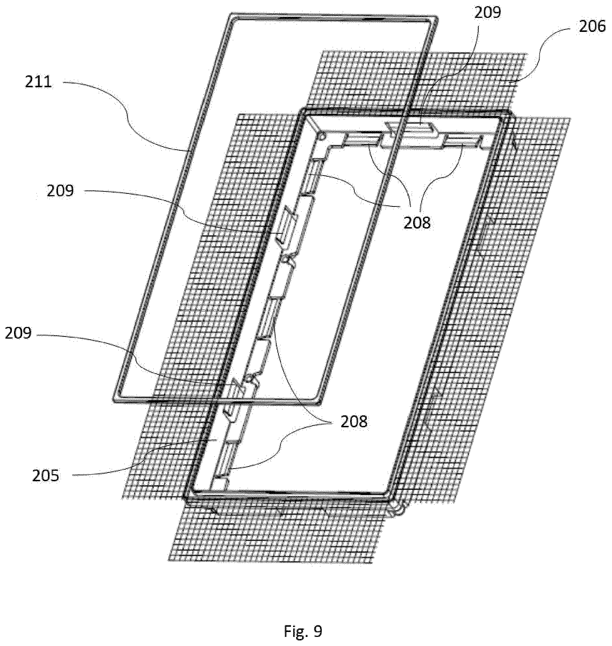

In particular, each safety tooth 204 comprised in the plurality of safety teeth 204, can be snapped into a corresponding plurality of lateral flap 209 present in the perimeter of the first frame 205, shown in figure 9.

During installation, the front closing profile 207 is superimposed and fitted to the first frame 205 by initial sliding of each tooth 204, comprised in the plurality of safety teeth 204, on the corresponding lateral flap 209, and subsequent snap locking.

Furthermore, according to an aspect of the invention, the frame 205 comprises a plurality of thrust flaps 208, which are compressed when in use, the front closing profile 207 is snap-fixed on the frame 205.

The thrust flaps 208 are configured to ease the release of the closing profile 207 when a flat element having a suitable thickness is interposed between the closing profile 207 and the frame 205, for example, according to a preferred embodiment, the flat element 110.

As shown in Figure 9, the plurality of lateral flaps 209 is placed perimeter, on an outer edge of the frame 205, while the plurality of thrust flaps 208 is placed perimetrically on an inner edge of the first frame 205.

According to another aspect of the invention, the electrical box 100 comprises a system for adjusting the distance between the first frame 205 and the box-like body 201.In particular, in the case of application in plasterboard, the electrical box 200 has a plurality of screws housed in suitable seats located at each corner of the box-like body 201, said screws allowing the adjustment of the distance between the first frame 205 and the box-like body 201, and hence the overall thickness of the electrical box 200 when installed.

According to another aspect of the invention, the adjustment of the distance between the frame 205 and the box-like body 201 takes place by means of a plastic element with the usual dimensions of the plasterboard walls in order to avoid manual adjustment and already have fixed thicknesses based on the standard.

Following the adjustment of the distance by means of the adjustment system, the frame 205 is locked on the box-like body 201.

According to a further aspect of the invention, the electrical box 200 comprises an unlocking system of the front closing profile 207, for example consisting of a flat element 210 and the plurality of thrust flaps 208.

The flat element 110 can be inserted in use in the space interposed between the front closing profile 207 and the first frame 205, by inserting the flat element 110 in correspondence with one of the thrust flaps 208, this is defused since the distance with the front closing profile 207 increases, and the latter can be extracted without applying forces or levering on the perimeter of the electrical box 200, thus avoiding the risk of injury or cracks in the wall where the box is installed.

According to an aspect of the invention, the front closing profile 207 comprises a perforated central portion having internal profiles such as to constitute a plastic cap.

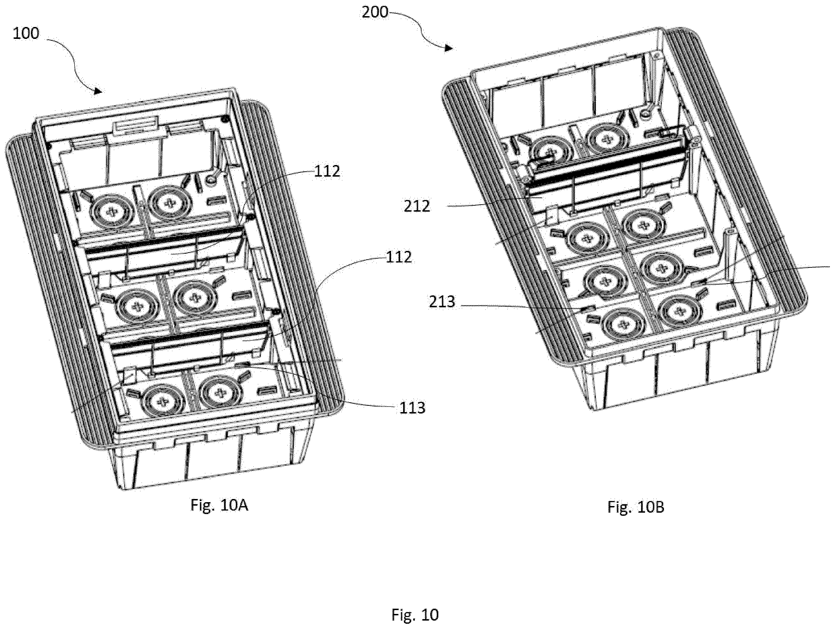

According to another aspect of the invention, as shown respectively in figures 10A and 10B, the box-like body 101 of the first embodiment and 201 of the second embodiment include at least a separator 112, 212 useful for isolating the types of connections performed even for multiple systems.

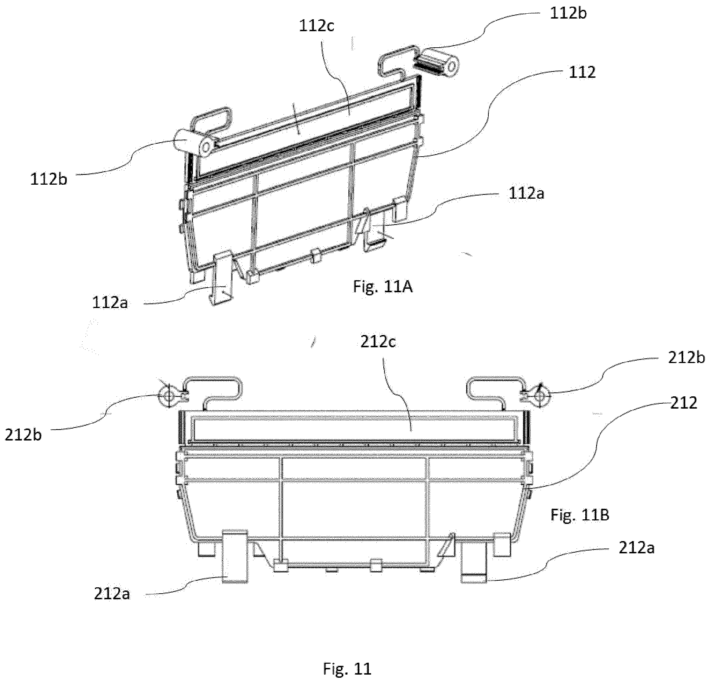

Figure 11 shows a perspective view of the separator 112 and a front view of the separator 212. More particularly, the separator 112, 212 comprises two lower hooks 112a, 212a which can be coupled to corresponding slots 113, 213 present on the bottom of the box-like body 101, 201; a spacer 112b, 212b for each side, which can be suitably spaced; a pre-cut upper wall 112c, 212c that can be detached if necessary.

By manually detaching the upper wall 112c together with the two spacers 112b, the electrical box is mounted flush with the wall in the single sheet of plasterboard.

By detaching only the spacers 112b and placing them between the first frame 205 and the box-like body 201, assembly on a double sheet of plasterboard is carried out. The spacers 212b are pre-assembled before inserting the screw and are hooked to the same separator 212.

Therefore, the flush-to-the-wall electrical box 100 according to the invention avoids the formation of cracks at the edges.

In addition, the flush-to-the-wall electrical box 100 according to the invention can be applied to both a masonry wall and a plasterboard wall.

Another advantage of the flush-to-wall electrical box 100 according to the invention is to allow for optimal aesthetics as it visually disappears from the wall and allows it to be painted as desired.

Finally, the flush-to-the-wall electrical box 100 according to the invention allows it to be easily unhooked and hooked up, thanks to the front profile release system.

Finally, it is clear that modifications and variations can be made to the flush-to-wall electrical box 100, 200 according to the invention described and illustrated here without thereby departing from the protective scope of the present invention, as defined in the attached claims.

## Claims

1. Flush-to-wall electrical box (100, 200) comprising:
- a box-like body (101,201) able to define a housing volume for electric and corrugated cables;
- perimeter fixing walls (102, 202);
- a perimeter edge (103, 203) of the box-like body (101, 201);
- a first frame (105, 205);
- a front closing profile (107, 207) that can be removably fixed to the first frame (105, 205) and able to define and close a space inside the box-like body (101, 201);
wherein said front closing profile (107, 207) is equipped with a plurality of safety teeth (104, 204) and wherein said first frame (105, 205) is equipped with a plurality of lateral flap (109, 209), each safety tooth (104, 204) being able to be snapped into each lateral flap (109, 209), and wherein said first frame (105, 205) is also provided with a plurality of thrust flaps (108, 208) configured to be compressed when the front closing profile (107, 207) is fixed to the first frame (105, 205), and to facilitate the release of the front closing profile (107, 207) when a flat element (110), having apt thickness, is interposed between an edge of the front closing profile (107, 207) and the first frame (105, 205).

2. Flush-to-wall electrical box (100, 200) according to claim 1, **characterized in that** said first frame (105) is composed of a first profile (105a) and a second profile (105b), said flush-to-wall electrical box (100) comprising a net (106) protruding beyond the perimeter edge (103) and interposed between the first profile (105a) and the second (105b).

3. Flush-to-wall electrical box (100, 200) according to claim 1, **characterized in that** said front closing profile (107) is centrally perforated and configured to house a plasterboard closing panel.

4. Flush-to-wall electrical box (100, 200) according to claim 1, **characterized in** comprising a net (206) protruding beyond the perimeter edge (203) of the box-like body (201) and a thin profile (211) ultrasonically welded on the first frame (205) to block the net (206).

5. Flush-to-wall electrical box (100, 200) according to claim 1, **characterized in** comprising a second frame (210) underneath the first frame (205) and fixed by means of screws housed in suitable cavities of the first frame (205), blocking the assembly constituted by the first frame (205), the second frame (210) and box-like body (201).

6. Flush-to-wall electrical box (100, 200) according to claim 1, **characterized in that** the front closing profile (207) comprises a perforated central portion having internal profiles such as to constitute a plastic cap.

7. Flush-to-wall electrical box (100, 200) according to claim 1, **characterized in** comprising an adjustment system for adjusting the distance between the first frame (105) and the box-like body (101, 201).

8. Flush-to-wall electrical box (100, 200) according to claim 7, **characterized in that** said adjustment system comprises a plurality of screws housed in suitable seats placed at each corner of the box-like body (101, 201), said screws enabling adjustment of the distance between the first frame (105, 205) and the box-like body (101, 201), and therefore the overall thickness of the electrical box (100, 200) when installed.

9. Flush-to-wall electrical box (100, 200) according to claim 1, **characterized in that** said flat element (110) is a card made of plastic material and having a substantially rectangular shape and thickness such as to interpose in the space between the front closing profile (107, 207) and the first frame (105, 205), when the front closing profile (107, 207) is fixed to the first frame (105. 205).

10. Flush-to-wall electrical box (100, 200) according to claim 1, **characterized in** being configured for the fixing to a wall by means of the perimeter fixing walls (102, 202) and / or through holes formed in the bottom of the box-like body (101, 201).

11. Flush-to-wall electrical box (100, 200) according to claim 1, **characterized in** comprising at least a separator (112, 212) comprising two lower hooks (112a, 212a) which can be coupled to corresponding slots (113, 213) present on the bottom of the box-like body (101, 201); a spacer (112b, 212b) for each side, which can be suitably spaced; a pre-cut upper wall (112c, 212c) that can be detached.

## Patentansprüche

1. Wandbündige Elektrodose (100, 200), umfassend:
- einen dosenartigen Körper (101, 201), der fähig ist, ein Gehäusevolumen für elektrische und gewellte Kabel zu definieren;
- Umfangsbefestigungswände (102, 202);
- eine Umfangskante (103, 203) des dosenartigen Körpers (101, 201);
- einen ersten Rahmen (105, 205);
- ein vorderes Verschlussprofil (107, 207), das entfernbar an dem ersten Rahmen (105, 205) befestigt werden kann und fähig ist, einen Raum innerhalb des dosenartigen Körpers (101, 201) zu definieren und zu schließen;
wobei das vordere Verschlussprofil (107, 207) mit einer Vielzahl von Sicherheitszähnen (104, 204) versehen ist und wobei der erste Rahmen (105, 205) mit einer Vielzahl von lateraler Lasche (109, 209) versehen ist, wobei jeder Sicherheitszahn (104, 204) fähig ist, in jede laterale Lasche (109, 209) eingeschnappt zu werden, und wobei der erste Rahmen (105, 205) auch mit einer Vielzahl von Drucklaschen (108, 208) versehen ist, die dazu konfiguriert ist, komprimiert zu werden, wenn das vordere Verschlussprofil (107, 207) an dem ersten Rahmen (105, 205) befestigt wird, und die Freigabe des vorderen Verschlussprofils (107, 207) zu erleichtern, wenn ein flaches Element (110), das eine geeignete Dicke aufweist, zwischen einer Kante des vorderen Verschlussprofils (107, 207) und dem ersten Rahmen (105, 205) eingefügt wird.

2. Wandbündige Elektrodose (100, 200) nach Anspruch 1, **dadurch gekennzeichnet, dass** der erste Rahmen (105) aus einem ersten Profil (105a) und einem zweiten Profil (105b) zusammengesetzt ist, wobei die wandbündige Elektrodose (100) ein Netz (106) umfasst, das über die Umfangskante (103) hinaus vorsteht und zwischen dem ersten Profil (105a) und dem zweiten (105b) eingefügt ist.

3. Wandbündige Elektrodose (100, 200) nach Anspruch 1, **dadurch gekennzeichnet, dass** das vordere Verschlussprofil (107) zentral perforiert und dazu konfiguriert ist, eine Gipskarton-Verschlussplatte aufzunehmen.

4. Wandbündige Elektrodose (100, 200) nach Anspruch 1, **dadurch gekennzeichnet, dass** sie ein Netz (206), das über die Umfangskante (203) des dosenartigen Körpers (201) hinaus vorsteht, und ein dünnes Profil (211), das auf den ersten Rahmen (205) ultraschallgeschweißt ist, um das Netz (206) zu blockieren, umfasst.

5. Wandbündige Elektrodose (100, 200) nach Anspruch 1, **dadurch gekennzeichnet, dass** sie einen zweiten Rahmen (210) unterhalb des ersten Rahmens (205) umfasst, der mittels Schrauben befestigt ist, die in geeigneten Hohlräumen des ersten Rahmens (205) aufgenommen sind, was die Anordnung blockiert, die durch den ersten Rahmen (205), den zweiten Rahmen (210) und dosenartigen Körper (201) gebildet wird.

6. Wandbündige Elektrodose (100, 200) nach Anspruch 1, **dadurch gekennzeichnet, dass** das vordere Verschlussprofil (207) einen perforierten zentralen Abschnitt umfasst, der interne Profile aufweist, um so eine Kunststoffkappe zu bilden.

7. Wandbündige Elektrodose (100, 200) nach Anspruch 1, **dadurch gekennzeichnet, dass** sie ein Einstellsystem zum Einstellen des Abstands zwischen dem ersten Rahmen (105) und dem dosenartigen Körper (101, 201) umfasst.

8. Wandbündige Elektrodose (100, 200) nach Anspruch 7, **dadurch gekennzeichnet, dass** das Einstellsystem eine Vielzahl von Schrauben umfasst, die in geeigneten Sitzen aufgenommen ist, die an jeder Ecke des dosenartigen Körpers (101, 201) platziert sind, wobei die Schrauben eine Einstellung des Abstands zwischen dem ersten Rahmen (105, 205) und dem dosenartigen Körper (101, 201) und daher der Gesamtdicke der Elektrodose (100, 200), wenn sie installiert ist, ermöglichen.

9. Wandbündige Elektrodose (100, 200) nach Anspruch 1, **dadurch gekennzeichnet, dass** das flache Element (110) eine Karte ist, die aus Kunststoffmaterial hergestellt ist und eine im Wesentlichen rechteckige Form und Dicke aufweist, um in dem Raum zwischen dem vorderen Verschlussprofil (107, 207) und dem ersten Rahmen (105, 205) eingefügt zu werden, wenn das vordere Verschlussprofil (107, 207) an dem ersten Rahmen (105. 205) befestigt ist.

10. Wandbündige Elektrodose (100, 200) nach Anspruch 1, **dadurch gekennzeichnet, dass** sie für die Befestigung an einer Wand mittels der Umfangsbefestigungswände (102, 202) und / oder durch Löcher konfiguriert ist, die in der Unterseite des dosenartigen Körpers (101, 201) ausgebildet sind.

11. Wandbündige Elektrodose (100, 200) nach Anspruch 1, **dadurch gekennzeichnet, dass** sie mindestens einen Separator (112, 212) umfasst, der zwei untere Haken (112a, 212a) umfasst, die mit entsprechenden Schlitzen (113, 213) gekoppelt werden können, die auf der Unterseite des dosenartigen Körpers (101, 201) vorhanden sind; einen Abstandshalter (112b, 212b) für jede Seite, der geeignet beabstandet werden kann; eine vorgeschnittene obere Wand (112c, 212c), die abgetrennt werden kann.

## Revendications

1. Boîte électrique encastrée dans le mur (100, 200) comprenant :
- un corps en forme de boîte (101,201) capable de définir un volume de boîtier pour des câbles électriques et ondulés ;
- des parois de fixation périmétriques (102, 202) ;
- un bord périmétrique (103, 203) du corps en forme de boîte (101, 201) ;
- un premier cadre (105, 205) ;
- un profil de fermeture avant (107, 207) qui être fixé de manière amovible au premier cadre (105, 205) et capable de définir et de fermer un espace à l'intérieur du corps en forme de boîte (101, 201) ;
dans laquelle ledit profil de fermeture avant (107, 207) est équipé d'une pluralité de dents de sécurité (104, 204) et dans laquelle ledit premier cadre (105, 205) est équipé d'une pluralité de volets latéraux (109, 209), chaque dent de sécurité (104, 204) pouvant être enclenchée dans chaque volet latéral (109, 209), et dans laquelle ledit premier cadre (105, 205) est également muni d'une pluralité de volets de poussée (108, 208) configurés pour être comprimés lorsque le profil de fermeture avant (107, 207) est fixé au premier cadre (105, 205), et pour faciliter le dégagement du profil de fermeture avant (107, 207) lorsqu'un élément plat (110), ayant une épaisseur appropriée, est interposé entre un bord du profil de fermeture avant (107, 207) et le premier cadre (105, 205).

2. Boîte électrique encastrée dans le mur (100, 200) selon la revendication 1, **caractérisée en ce que** ledit premier cadre (105) est composé d'un premier profil (105a) et d'un second profil (105b), ladite boîte électrique encastrée dans le mur (100) comprenant un filet (106) faisant saillie au-delà du bord périmétrique (103) et interposé entre le premier profil (105a) et le second profil (105b).

3. Boîte électrique encastrée dans le mur (100, 200) selon la revendication 1, **caractérisée en ce que** ledit profil de fermeture avant (107) est perforé au centre et configuré pour loger un panneau de fermeture en plaque de plâtre.

4. Boîte électrique encastrée dans le mur (100, 200) selon la revendication 1, **caractérisée en ce qu'**elle comprend un filet (206) faisant saillie au-delà du bord périmétrique (203) du corps en forme de boîte (201) et un profil mince (211) soudé par ultrasons sur le premier cadre (205) pour bloquer le filet (206).

5. Boîte électrique encastrée dans le mur (100, 200) selon la revendication 1, **caractérisée en ce qu'**elle comprend un second cadre (210) situé sous le premier cadre (205) et fixé au moyen de vis logées dans des cavités appropriées du premier cadre (205), bloquant l'ensemble constitué du premier cadre (205), du second cadre (210) et du corps en forme de boîte (201).

6. Boîte électrique encastrée dans le mur (100, 200) selon la revendication 1, **caractérisée en ce que** le profil de fermeture avant (207) comprend une partie centrale perforée ayant des profils internes de manière à constituer un capuchon en plastique.

7. Boîte électrique encastrée dans le mur (100, 200) selon la revendication 1, **caractérisée en ce qu'**elle comprend un système de réglage permettant de régler la distance entre le premier cadre (105) et le corps en forme de boîte (101, 201).

8. Boîte électrique encastrée dans le mur (100, 200) selon la revendication 7, **caractérisée en ce que** ledit système de réglage comprend une pluralité de vis logées dans des sièges appropriés placés à chaque coin du corps en forme de boîte (101, 201), lesdites vis permettant le réglage de la distance entre le premier cadre (105, 205) et le corps en forme de boîte (101, 201), et donc de l'épaisseur totale de la boîte électrique (100, 200) une fois installée.

9. Boîte électrique encastrée dans le mur (100, 200) selon la revendication 1, **caractérisée en ce que** ledit élément plat (110) est une carte en matière plastique et ayant une forme sensiblement rectangulaire et une épaisseur de manière à s'interposer dans l'espace entre le profil de fermeture avant (107, 207) et le premier cadre (105, 205), lorsque le profil de fermeture avant (107, 207) est fixé au premier cadre (105. 205).

10. Boîte électrique encastrée dans le mur (100, 200) selon la revendication 1, **caractérisée en ce qu'**elle est configurée pour être fixée à un mur au moyen des parois de fixation périmétriques (102, 202) et/ou à travers des trous formés dans le fond du corps en forme de boîte (101, 201).

11. Boîte électrique encastrée dans le mur (100, 200) selon la revendication 1, **caractérisée en ce qu'**elle comprend au moins un séparateur (112, 212) comprenant deux crochets inférieurs (112a, 212a) qui peuvent être accouplés à des fentes correspondantes (113, 213) présentes sur le fond du corps en forme de boîte (101, 201) ; une entretoise (112b, 212b) pour chaque côté, qui peut être espacée de manière appropriée ; une paroi supérieure prédécoupée (112c, 212c) qui peut être détachée.
